# EUROPÄISCHE PATENTSCHRIFT

(11) **EP 2 838 806 B1**
(45) Veröffentlichungstag und Bekanntmachung des Hinweises auf die Patenterteilung: **05.09.2018**
(21) Anmeldenummer: 13723450.6
(22) Anmeldetag: 06.05.2013
(51) Int. Cl.: B65D 19/18, B65D 21/02, B64F 1/36

(54) **BEHÄLTER ZUM TRANSPORTIEREN VON GEPÄCKSTÜCKEN IN EINER SORTIERANLAGE UND SORTIERANLAGE**
CONTAINER FOR A BAGGAGE CONVEYOR OF A BAGGAGE PROCESSING SYSTEM
CONTENEUR POUR LE TRANSPORT DE BAGAGES DANS UN SYSTÈME DE TRIAGE

(30) Priorität: 29.05.2012 DE 102012208997
(43) Veröffentlichungstag der Anmeldung: 25.02.2015
(73) Patentinhaber: Siemens Aktiengesellschaft, 80333 München (DE)
(72) Erfinder: DELANEY, David, 449308 Singapore (SG); TEN BERGE, Balthazar-Simon, 63500 Seligenstadt (DE)
(86) Internationale Anmeldenummer: PCT/EP2013/059369
(87) Internationale Veröffentlichungsnummer: WO 2013/178431

(56) Entgegenhaltungen:
- EP-A2- 1 609 745
- WO-A1-03/026976
- FR-A1- 2 825 685
- JP-U- S60 101 426
- US-A1- 2007 132 580

## Beschreibung

Die Erfindung betrifft einen Behälter zum Transportieren von Gepäckstücken in einer Sortieranlage an einem Flughafen nach dem Oberbegriff des Patentanspruches 1 und eine Sortieranlage für Gepäckstücke an einem Flughafen nach Patentanspruch 13.

Bei der Förderung von Gepäckstücken im Laufe eines Sortierprozesses können diese direkt von einem Förderer des Fördersystems, wie zum Beispiel einem Band-, Gurt- und/oder Rollenförderer, transportiert werden. Da sich die Gepäckstücke in ihrer Form und ihren Abmessungen voneinander stark unterscheiden können, werden alternativ oder zusätzlich Behälter zur Aufnahme der Gepäckstücke eingesetzt, die vorteilhaft als einheitliches Transportmittel für das Fördersystem dienen. Das Fördersystem kann demnach gemäß den bekannten Eigenschaften des Behälters ausgelegt werden. Vorteilhaft ist auch eine bessere Kontrolle der Position und der Verfolgung der einzelnen Gepäckstücke innerhalb des Fördersystems. Dies ist von besonderem Vorteil, insbesondere im Hinblick auf die Transportvorgänge, die die Gepäckstücke innerhalb eines Fördersystems üblicherweise absolvieren müssen und bei welchen die Gepäckstücke Schocks, plötzlichen und hohen Beschleunigungen sowie Richtungswechseln unterliegen.

Zu Sicherheitszwecken werden die zu transportierenden Gepäckstücke auf deren Inhalt untersucht. Dies erfolgt herkömmlicherweise mittels einer auf Röntgenstrahlung, insbesondere auf der Technik der Computertomographie basierenden Untersuchung.

Um den Behandlungsaufwand bei solchen Untersuchungen gering zu halten, ist vorteilhaft, einen Behälter der oben beschriebenen Art zur Verfügung zu stellen, der eine ausreichende Durchlässigkeit für Röntgenstrahlungen aufweist. Somit kann auf ein Entladen und ein erneutes Beladen eines Behälters vor und nach der Untersuchung verzichtet werden. Es ist in der WO 03/026976 A1 ein Behälter bereits vorgeschlagen worden, welcher für eine auf Röntgenstrahlung basierende Untersuchung geeignet ist.

Der Erfindung liegt die Aufgabe zugrunde, einen gattungsgemäßen Behälter bereitzustellen, der mit einem geringen Aufwand herstellbar ist, robust gegenüber den oben genannten Transportvorgängen und möglichst homogen in Bezug auf die Röntgenstrahldurchlässigkeit ausgebildet ist.

Die vorgenannte Aufgabe wird durch die im Patentanspruch 1 angegebenen Merkmale gelöst.

Durch die Bereitstellung des Behälters mit einem aus einem Stück bestehenden Grundkörper kann ein geringer Herstellaufwand erreicht werden. Insbesondere kann auf ein Aneinanderbringen zweier Bauteile für den Bodenbereich und den Transportbereich verzichtet werden, wodurch Herstell- und Montageschritte eingespart werden können. Anpassungen in der Ausformung des Grundkörpers können außerdem aufgrund der Reduzierung der Anzahl von Bauteilen mit einem geringeren Aufwand erfolgen. Des Weiteren kann - im Gegensatz zu Lösungen mit einem Transportbereich und einem Bodenreich aus zwei unterschiedlichen Bauteilen - eine erhöhte Robustheit gegenüber den oben genannten Transportvorgängen innerhalb eines Fördersystems erreicht werden. Der Grundkörper ist hierbei frei von Schnittstellen, an welchen relative Bewegungen zwischen Transportbereich und Bodenbereich aufgrund einer Kraftübertragung auftreten können. Dadurch, dass keine solchen Schnittstellen vorhanden sind, kann ferner eine erhöhte Homogenität in der Röntgenstrahldurchlässigkeit des Behälters erreicht werden. Durch Bildung des Grundkörpers von einem Schaumstoffformteil kann ein besonders leichter Behälter bereitgestellt werden, der dennoch eine hohe Belastbarkeit im Hinblick auf typische Transportvorgänge aufweist. Der Behälter kann aufgrund der hohen Nachgiebigkeit des Schaumstoffs in diesen Transportvorgängen auftretende Schocks hoher Energie absorbieren oder schweren Ladungen unterliegen, ohne dass irreversible Verformungen erfolgen.

Unter einem "Schaumstoffformteil" soll insbesondere ein Bauteil verstanden werden, welches das Ergebnis eines Ausformungsprozess mit einem Schaumstoff, insbesondere das Ergebnis eines Formteilprozesses, ist.

Unter einem "röntgenstrahldurchlässigen" Material soll ein Material verstanden werden, das eine Durchlässigkeit von zumindest 50%, vorteilhaft zumindest 75% und besonders bevorzugt zumindest 90% gegenüber einer Röntgenstrahlung aufweist. Derartige Durchlässigkeiten können insbesondere mit Materialien erreicht werden, die eine effektive Ordnungszahl Z_{eff} aufweisen, welche die Bedingung Z_{eff} < 7 erfüllt.

Der Behälter weist eine Bodenfläche auf, die mit dem Bodenbereich des Grundkörpers gekoppelt ist und bei einem Transport mittels des Fördersystems an der Fördereinheit, zum Beispiel einem Förderband, Förderrollen usw. anliegt. Die Kopplung des Bodenbereichs mit der Fördereinheit erfolgt hierbei über einen Reibschluss zwischen der Bodenfläche des Behälters und einer Oberfläche der Fördereinheit. Die Bodenfläche ist in diesem Zusammenhang vorteilhafterweise flach ausgebildet, um die Kontaktfläche mit der Fördereinheit zu maximieren. Eine flache Bodenfläche ermöglicht außerdem ein vorteilhaftes Transportieren des Behälters mittels eines Rollenförderers.

Der vom Grundkörper gebildete Bodenbereich weist zweckmäßigerweise auf dessen Unterseite eine Oberfläche auf, die beim Transport mittels einer Fördereinheit der Fördereinheit zugewandt ist. Diese Oberfläche des Bodenbereichs kann der Bodenfläche des Behälters entsprechen. In dieser Ausführung ist die Bodenfläche des Behälters vom Grundkörper gebildet, der beim Transport an der Fördereinheit anliegt.

Der Behälter weist zweckmäßigerweise eine Aufnahmefläche auf, die mit dem Transportbereich des Grundkörpers gekoppelt ist und vorzugsweise zumindest im Wesentlichen parallel zur Bodenfläche ausgerichtet ist. Der Behälter ist für den Transport von Gepäckstücken innerhalb einer Sortieranlage geeignet, wobei die Aufnahmefläche vorteilhafterweise zur Einzelaufnahme eines Gepäckstücks dient. Er kann aber auch zum Transport von Paketen, Packeinheiten und anderen Stückgütern dienen.

Der vom Grundkörper gebildete Transportbereich weist auf dessen Oberseite zweckmäßigerweise eine Oberfläche auf, die beim Transport eines Stückguts diesem zugewandt ist. Diese Oberfläche des Transportbereichs kann der Aufnahmefläche des Behälters entsprechen. In dieser Ausführung ist die Aufnahmefläche des Behälters vom Grundkörper gebildet, an welchem das zu transportierende Stückgut anliegt.

Es kann alternativ oder zusätzlich ein Mittel vorgesehen sein, das auf der Oberfläche des Transportbereichs des Grundkörpers aufgebracht bzw. die Oberfläche des Transportbereichs abdeckend mit dem Grundkörper gekoppelt ist, und welches die Aufnahmefläche des Behälters bildet. Das Mittel kann eine Beschichtung, die an der Oberfläche des Transportbereichs mittels Stoffschluss haftet und/oder ein Abdeckmittel sein, das an den Transportbereich - insbesondere durch Herstellung eines Form- und/oder Kraftschlusses - angebracht wird und vorzugsweise von diesem wieder trennbar ist.

Außerdem können Beschichtungen und/oder Abdeckmittel - in Bezug auf eine Förderrichtung - im Bereich der Stirnseiten und/oder der weiteren seitlichen Wände des Behälters an den Grundkörper angebracht sein. Sie können insbesondere eine Schutzfunktion in Ecken- oder Kantenbereichen des Behälters haben. Es ist eine mehrseitige - insbesondere allseitige - Beschichtung des Grundkörpers denkbar. In einer besonderen Ausführung ist ferner denkbar, dass eine Abdeckeinheit eingesetzt wird, die mehrere Seiten des Grundkörpers abdeckt bzw. dass der Grundkörper zumindest teilweise in dieser Abdeckeinheit eingebettet ist.

Der Grundkörper gibt in den oben genannten Ausführungen die Form des Behälters vor, wobei die Anbringung etwaiger Beschichtungen und/oder Abdeckmittel an den Grundkörper keine wesentliche Formänderung des Behälters bewirken. Die oben genannten Beschichtungen und/oder Abdeckmittel zum Anbringen an den Grundkörper haben vorteilhaft die Funktion, bestimmte Oberflächeneigenschaften, z.B. in Bezug auf einen Reibwert oder eine mechanische Festigkeit, bereit zu stellen oder Kantenbereiche zu schützen. Insbesondere bildet der Grundkörper zumindest 60%, vorteilhaft zumindest 75% und bevorzugt zumindest 85% des gesamten Behältervolumens.

Zur Herstellung des Schaumstoffs ist der Einsatz verschiedener Materialen möglich. Insbesondere wird der Einsatz geschlossenzelliger Schaumstoffe (oder "Closed-Cell-Foam") bevorzugt, um eine hohe Oberflächenfestigkeit gegenüber Flüssigkeiten zu erreichen.

In einer bevorzugten Ausführungsform des erfindungsgemäßen Behälters ist der Grundkörper aus einem thermoplastischen strukturellen Hartschaum hergestellt. Hierdurch können gängige Herstellverfahren angewendet und geringe Herstellkosten erreicht werden. Insbesondere kann der Grundkörper das Ergebnis eines Spritzgießverfahrens mit einem thermoplastischen Kunststoff sein.

Eine besonders vorteilhafte Ausführung sieht vor, dass der Grundkörper von einem Schaumstoffformteil gebildet ist, wobei das Schaumstoffformteil einen Partikelschaumstoff auf thermoplastischer Basis aufweist. Bei der Ausformung solcher Materialien, insbesondere in einem Formteilprozess, kann ein Grundkörper bereit gestellt werden, der eine sehr homogene Materialdichteverteilung über das gesamte Schaumstoffformteil aufweist.

In diesem Zusammenhang kann ein Grundkörper mit einer geringen mittleren Dichte und daher einem geringen Gewicht bereit gestellt werden, wenn das Schaumstoffformteil einen Partikelschaumstoff auf Polypropylen-Basis aufweist. Es können insbesondere mittlere Materialdichten im Bereich von 0,9 g/cm³ erreicht werden. Neben einer hohen Robustheit können auch eine vorteilhafte Schalldämpfung und eine hohe Röntgenstrahldurchlässigkeit erreicht werden, da das eingesetzte Material eine typische effektive Ordnungszahl im Bereich Z_{eff} ≈ 5,5 aufweist. Dieses Material kann ferner einfach wiederverwertet werden. Durch die Ausführung des Behälters mit einem einstückigen Grundkörper aus diesem Material kann des Weiteren ein Behälter bereit gestellt werden, der metallfrei ausgebildet ist, was im Hinblick auf eine Zulassung zur Röntgenuntersuchung durch Untersuchungsbehörden von besonderem Vorteil ist. Dieses Material ist ferner halogen- und treibgasfrei.

In weiteren Ausführungen können weitere Materialien, wie Polyethylen (PE), Polystyrol (PS), Polyamid (PA) oder Polyurethane (PU), insbesondere ein Partikelschaumstoff auf PE-, PS-, PA-, oder PU-Basis eingesetzt werden.

Um eine weitere Gewichtsreduzierung zu erreichen, wird in einer weiteren Ausführungsvariante vorgeschlagen, dass der Grundkörper interne Aussparungen aufweist. Diese können vollständig vom Grundkörpermaterial umschlossen oder zumindest teilweise nach außen offen ausgebildet sein. Die Aussparungen sind vorzugsweise - in Bezug auf eine Förderrichtung des Behälters - im Bereich der Stirnseiten des Behälters angeordnet. Außerdem kann durch die Aussparungen eine vorteilhafte Schallabsorption erzielt werden.

Die Aussparungen können beispielsweise von einer internen Gitterstruktur des Grundkörpers gebildet sein, die dazu dient, die Nachgiebigkeit des Grundkörpers gegenüber den oben genannten Transportvorgängen zu erhöhen. Diese Ausführung eignet sich insbesondere für eine Herstellung des Grundkörpers mit einem Material, welches von einem Schaumstoff unterschiedlich ist.

Ferner wird vorgeschlagen, dass im Transportbereich eine zentrale, flache Aufnahmefläche zur Aufnahme eines Stückguts angeordnet ist, die von einer sich über die Aufnahmefläche erhebenden Haltestruktur umgeben ist. Durch eine auf der Oberseite des Transportbereichs zentral angeordnete und flache Aufnahmefläche des Behälters kann - im Gegensatz zu einer gekrümmten Ausführung - eine erhöhte Stabilität des zu transportierenden Stückguts erreicht werden. Insbesondere kann die Wahrscheinlichkeit, dass das Stückgut während des Transports möglichst flach liegt, vorteilhaft erhöht werden. In dieser liegenden Position kann die Röntgen-Untersuchung effizienter durchgeführt werden. Die Haltestruktur dient vorteilhafterweise dazu, das aufgenommene Stückgut während des Transports auf der Aufnahmefläche zu halten. Die Haltestruktur umschließt vorzugsweise die Aufnahmefläche, die gegenüber dieser Haltestruktur in einer Vertiefung des Grundkörpers angeordnet ist. Die Aufnahmefläche des Behälters kann - wie oben bereits erörtert - vom Grundkörper und/oder von einer Beschichtung bzw. einem Abdeckmittel gebildet sein. In diesem Zusammenhang wird vorgeschlagen, dass die Haltestruktur Wandteile aufweist, die an die flache Aufnahmefläche angrenzen, sich senkrecht zu dieser erheben und - relativ zu einer Förderrichtung - einen Vorder- bzw. Hinterrand bilden. Hierdurch kann besonders effizient vermieden werden, dass ein aufgenommenes Stückgut die Aufnahmefläche aufgrund einer starken Beschleunigung bzw. Bremsung in Förderrichtung des Behälters verlässt.

Außerdem kann ein vorteilhafter Schutz gegen Fliehkräfte, die während des Transports auftreten, erreicht werden, wenn die Haltestruktur ein Paar flacher, relativ zur Aufnahmefläche geneigter Übergangsflächen aufweist, die sich beidseitig der Aufnahmefläche an diese anschließen und jeweils - relativ zu einer Förderrichtung - einen seitlichen Rand des Behälters bilden. Die Übergangsflächen dienen zweckmäßigerweise zu einem Übergang eines aufgenommenen Stückguts vom Behälter zu einem weiteren Förderelement. Sie dienen vorteilhafterweise als Gleitflächen, auf welchen das Stückgut in einer geneigten Stellung des Behälters gleitet. Um einen solchen Übergang zu ermöglichen und dennoch einen effizienten Schutz gegen Fliehkräfte zu erreichen, bilden die Übergangsflächen vorzugsweise jeweils einen stumpfen Winkel, bevorzugt einen Winkel größer als 135°, insbesondere größer als 145°.

Es kann ein besonders effizienter Schutz erreicht werden, wenn im Bodenbereich eine Bodenfläche angeordnet ist und die geneigten Übergangsflächen eine maximale Höhe relativ zur Bodenfläche aufweist, wobei die Aufnahmefläche eine Höhe relativ zur Bodenfläche aufweist, die kleiner als 50% der maximalen Höhe der Übergangsflächen ist. Unter der "Höhe" soll insbesondere eine Erstreckung senkrecht zur flachen Bodenfläche bzw. zur Aufnahmefläche verstanden werden.

Ferner wird vorgeschlagen, dass im Bodenbereich eine Bodenfläche angeordnet ist und die Haltestruktur eine maximale Höhe relativ zur Bodenfläche aufweist, wobei die Aufnahmefläche eine Höhe relativ zur Bodenfläche aufweist, die kleiner als 20% der maximalen Höhe der Haltestruktur ist. Durch die gewählte, zur Höhe der Aufnahmefläche relativ betrachtet - hohe Haltestruktur können eine erhöhte Robustheit und Steifigkeit des Behälters erreicht werden. Mit einer tiefen Anordnung der Aufnahmefläche relativ zur Haltestruktur können eine tiefe Lage des Schwerpunkts des geladenen Behälters und daher eine hohe Stabilität erzielt werden.

Ein besonders platzsparendes Stauen unbenutzter Behälter kann erreicht werden, wenn die Haltestruktur im Bodenbereich und im Transportbereich jeweils eine Schnittstelle aufweist, die zum Behälterstapeln vorgesehen ist. Die Schnittstellen sind hierbei zweckmäßigerweise zueinander korrespondierend ausgeführt.

Um die mechanischen Eigenschaften des Grundkörpers zu verändern wird in einer weiteren Ausführung vorgeschlagen, dass der Grundkörper zumindest eine Oberfläche aufweist, die mit einer Beschichtung hinterspritzt ist. Die Aufbringung einer Beschichtung auf eine bestehende Oberfläche des Grundkörpers kann insbesondere in einem sogenannten "In-Mold-Verfahren" erfolgen, bei welchem der Grundkörper in einem SpritzgießWerkzeug mit einem Material zur Herstellung von Oberflächenstrukturen hinterspritzt wird. Beispiele solcher Verfahren sind "Back-Foaming" (oder "Hinterschäumen"), "In-Mold-Skinning" (oder "Beschichtung durch Injektion in die Form"), "Thermal Embossing / Thermal Stamping" (oder "Thermisches Einprägen").

Gegenstand der Erfindung ist auch eine Sortieranlage für Gepäckstücke an einem Flughafen, umfassend ein Fördereinheiten aufweisendes Fördersystem zur Förderung von Gepäckstücken und mit einer Fördereinheit gekoppelte Behälter zum Transportieren der Gepäckstücke. Dabei sind die Behälter nach einem der Ansprüche 1 bis 12 ausgebildet.

Es werden Ausführungsbeispiele der Erfindung anhand der Zeichnungen näher erläutert. Es zeigen:
- Figur 1:: einen Behälter für ein Fördersystem,
- Figur 2:: den Behälter aus Figur 1 in einer Schnittansicht,
- Figur 3:: den Behälter aus Figur 1 in einer weiteren Schnittansicht,
- Figur 4:: einen Stapel von Behältern,
- Figur 5:: verschiedene Ausführungen einer Oberflächenstruktur der Bodenfläche des Behälters aus Figur 1,
- Figur 6:: eine alternative Ausführung des Behälters aus Figur 1 mit Aussparungen,
- Figur 7:: eine alternative Ausführung des Behälters mit beschichteten Oberflächen und
- Figur 8:: den Behälter aus Figur 1 und einen Adapter.

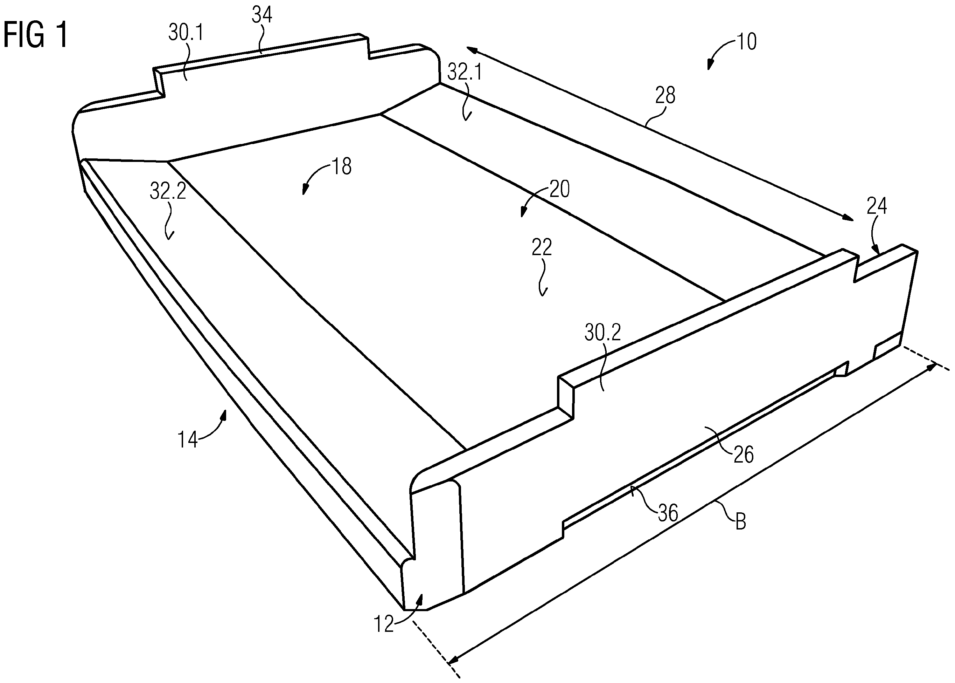

Figur 1 zeigt einen Behälter 10 für ein Fördersystem zur Förderung von Stückgütern in einer perspektivischen Ansicht. Im betrachteten Ausführungsbeispiel ist der Behälter 10 für den Transport von Gepäckstücken vorgesehen. Er kann insbesondere für die Behandlung von Gepäckstücken am Flughafen dienen. Nach der Abgabe eines Gepäckstücks an einem Check-In-Schalter wird das mit einem Identifikationsmittel, z.B. in der Form eines auf eine Banderole aufgebrachten Barcodes und/oder eines codierten RFIDs, versehene Gepäckstück nach Verlassen des Check-In-Bereichs auf einen derartigen Behälter 10 geladen. Der Behälter 10 dient als einheitliches Transportmittel zum Transportieren des Gepäckstücks durch eine Sortieranlage bis eine Entladestelle, die dem Gepäckstück zugeordneten Flug entspricht. Der Sortiervorgang bzw. die Förderung bis zur zugeordneten Entladestelle erfolgt anhand der Informationen, die dem Identifikationsmittel entnehmbar sind. An dieser Entladestelle wird das Gepäckstück von dem Behälter entladen, indem der Behälter beispielsweise seitlich gekippt wird. Der Behälter 10 wird in der Sortieranlage mittels eines Fördersystems gefördert, das unterschiedliche Fördereinheiten aufweisen kann, wie z.B. Band-, Gurt-, Ketten oder Rollenförderer.

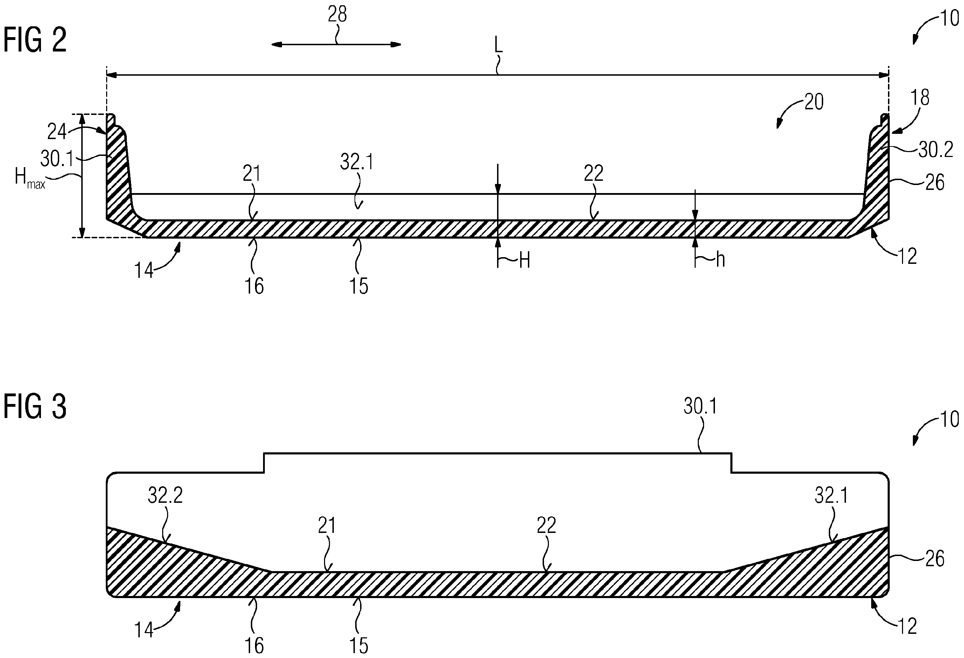

Zur Kopplung mit einer Fördereinheit des Fördersystems dient ein Bodenbereich 12 des Behälters 10. Dieser weist eine Unterseite 14 auf, auf welcher sich eine Oberfläche 15 erstreckt. Diese entspricht einer Bodenfläche 16 des Behälters 10 (siehe Figuren 2 und 3). Die Bodenfläche 16 wird mit der Fördereinheit derart gekoppelt, dass sie den Behälter 10 mitnimmt. Insbesondere erfolgt eine Kopplung des Behälters 10 mit der Fördereinheit durch die Herstellung eines Reibschlusses zwischen einer Oberfläche der Fördereinheit und der Bodenfläche 16. Hierzu ist die Bodenfläche 16 insbesondere flach ausgebildet. Zusätzlich kann eine Kopplung durch Herstellung eines Formschlusses erfolgen.

Der Behälter 10 weist außerdem einen Transportbereich 18 auf, der vom Bodenbereich 12 gestützt ist. Der Transportbereich 18 weist eine der Unterseite 14 gegenüberliegende Oberseite 20 auf, auf welcher sich eine Oberfläche 21 erstreckt und eine diese umgebende Haltestruktur 24 angeordnet sind. Die Oberfläche 21 entspricht einer Aufnahmefläche 22 des Behälters 10, die in der Ausführung des Behälters 10 für eine Gepäcksortieranlage zur Einzelaufnahme eines Gepäckstücks dient.

Bevor das Gepäckstück einem Sortiervorgang unterlegt wird, erfolgt eine Untersuchung des Inhalts des Gepäckstücks durch eine Untersuchungsbehörde. Hierbei erfolgt die Untersuchung mittels Röntgenstrahlungen.

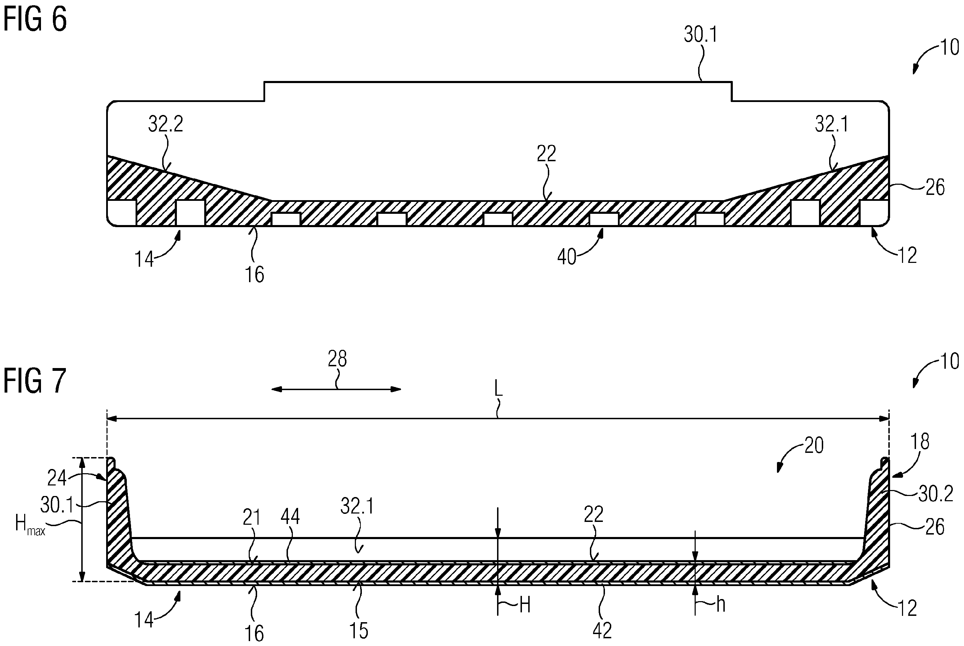

Der Behälter 10 weist einen Grundkörper 26 auf, der einstückig ausgebildet ist und den Bodenbereich 12 und den Transportbereich 18 bildet. Der Bodenbereich 12 und der Transportbereich 18 sind demnach einstückig aneinander angeformt. Anders ausgedrückt ist der den Bodenbereich 12 und den Transportbereich 18 bildende Grundkörper 26 aus einem Guss hergestellt. Die Oberflächen 15 und 21 sowie die Haltestruktur 24 hängen demnach einstückig zusammen. Hierdurch wird - anders als bei mehrstückigen Behältern - bei der Bildung des Boden- und Transportbereichs auf Schnittstellen zwischen verschiedenen Bauteilen verzichtet, bei welchen relative Bewegungen herkömmlicherweise aufgrund von Kraftübertragungen und Verschleiß während eines Transportvorgangs auftreten können. Im betrachteten Ausführungsbeispiel entsprechen die Oberflächen 15 und 21 der Bodenfläche 16 bzw. Aufnahmefläche 22 des Behälters 10, d.h. die Bodenfläche 16 und die Aufnahmefläche 22 des Behälters 10 sind vom Grundkörper 26 gebildet. In weiteren Ausführungen kann die Oberfläche 21 beschichtet sein und/oder durch ein Abdeckmittel abgedeckt sein (siehe Figur 7) .

Der Grundkörper 26 ist aus einem röntgenstrahldurchlässigen Material hergestellt. Dieses Material ist ein expandiertes Polypropylen (oder EPP), das als Schaumstoff eine besonders geringe mittlere Materialdichte aufweist. Es besitzt ferner eine hohe Röntgenstrahldurchlässigkeit, aufgrund seiner kleinen effektiven Ordnungszahl. Der Grundkörper 26 ist demnach als Schaumstoffformteil ausgebildet, das eine hohe Nachgiebigkeit aufweist. Der Grundkörper 26 kann verschiedenen Vorgängen beim Transport unterliegen, wie hochenergetischen Schocks, großen Beschleunigungen oder Bremsungen, ohne dass irreversible Verformungen auftreten. Aufgrund der Eigenschaft vom Polypropylen als thermoplastisches Material können gängige Herstellverfahren, wie insbesondere Formteilprozesse, angewendet werden, wodurch besonders geringe Herstellkosten erreicht werden können.

Der Behälter 10 weist eine Haupterstreckungsrichtung auf, die insbesondere der Förderrichtung 28, in welcher er transportiert wird, entspricht. Er weist in dieser Förderrichtung 28 eine Länge L auf (siehe Figur 2), die- um das Erfordernis eines hohen Durchsatzes der Sortieranlage zu erfüllen - einen Wert von 120 cm beträgt. Grundsätzlich kann die Länge des Behälters 10 einen Wert im Intervall [115 cm; 200 cm] haben.

Figur 2 zeigt den Behälter 10 in einer Schnittansicht gemäß einer Schnittebene, die parallel zur Förderrichtung 28 und senkrecht zur Aufnahmefläche 22 ausgerichtet ist. In dieser Zeichnung sind die flache Bodenfläche 16, die parallel zu dieser ausgerichtete Aufnahmefläche 22 und die Haltestruktur 24, welche die Aufnahmefläche 22 umgibt, zu sehen.

Die Aufnahmefläche 22 ist auf der Oberseite 20 zentral angeordnet und flach ausgebildet. Durch diese flache Ausführung weist die Aufnahmefläche 22 eine Höhe h relativ zur Bodenfläche 16 auf, die über die gesamte Aufnahmefläche konstant ist. Die Aufnahmefläche 22 beträgt vorzugsweise zumindest 60% der Bodenfläche. Die Haltestruktur 24, die zu einem Halten eines aufgenommenen Stückguts während eines Transports dient, umschließt die Aufnahmefläche 22 und erhebt sich über diese.

Die Haltestruktur 24 weist Wandteile 30.1, 30.2 auf, die - sich senkrecht erhebend - an die Aufnahmefläche 22 angrenzen. Diese sind in Förderrichtung 28 betrachtet gegenüber einander und jeweils an einem Rand des Behälters 10 angeordnet. In Förderrichtung 28 betrachtet bilden die Wandteile 30.1, 30.2 einen vorderen bzw. hinteren Rand des Behälters 10 bzw. Stirnseiten des Behälters 10, wobei die Aufnahmefläche 22 zentral zwischen den Wandteilen 30.1, 30.2 angeordnet ist.

Außerdem weist die Haltestruktur 24 ein Paar flacher Übergangsflächen 32.1, 32.2 auf, die - in Förderrichtung 28 betrachtet - beidseitig der Aufnahmefläche 22 angeordnet sind und sich jeweils an diese - senkrecht zur Förderrichtung 28 betrachtet - im Wesentlichen stufenlos bzw. kontinuierlich anschließen. Diese sind ebenfalls in Figur 3 zu sehen, welche eine Schnittansicht des Behälters 10 gemäß einer zur Förderrichtung 28 senkrechten Schnittebene darstellt. Die Übergangsflächen 32 dienen - bei einem seitlichen Kippen des Behälters 10 - als Gleitflächen für das zu entladende Gepäckstück und - bei einem Transport - zur Halterung des Gepäckstücks auf der Aufnahmefläche 22 gegenüber Fliegkräften.

Die Übergangsflächen 32 sind gegenüber der flachen Aufnahmefläche 22 geneigt und bilden mit dieser einen stumpfen Winkel. In anderen Worten formuliert bilden die Übergangsflächen 32 im in Figur 3 dargestellten Querschnitt zusammen ein "V", welches von der flachen Aufnahmefläche 22 unterbrochen ist. Wie der Figur 1 zu entnehmen ist, erstrecken sich die Übergangsflächen 32 in Förderrichtung 28 und verbinden die Wandteile 30.1, 30.2 miteinander.

Ausgehend von einem der Aufnahmefläche 22 zugewandten Rand, der die Höhe der Aufnahmefläche 22 aufweist, steigen die Übergangsflächen 32 - senkrecht zur Förderrichtung 28 betrachtet - jeweils kontinuierlich bis einen seitlichen Rand der Behälters 10, an welchen die Übergangsflächen 32 eine maximale Höhe H erreichen. Die Höhe h der Aufnahmefläche 22 ist kleiner als 50% der maximalen Höhe H des Außenrands der Übergangsflächen 32, d.h. des seitlichen Rands des Behälters 10. Die maximale Höhe H weist vorzugsweise einen Wert im Intervall [4,5 cm; 15 cm] auf, wobei im betrachteten Ausführungsbeispiel der Wert H = 7 cm gewählt wurde. Die Höhe h der Aufnahmefläche 22 weist vorteilhaft einen Wert von 2,5 cm auf.

Die maximale Höhe Hₘₐₓ der Haltestruktur 24 entspricht der maximalen Höhe der Wandteile 30, wobei die Höhe h der Aufnahmefläche 22 kleiner als 20% der maximalen Höhe Hₘₐₓ beträgt. Im betrachteten Ausführungsbeispiel gilt Hₘₐₓ = 19 cm, wobei Werte im Intervall [15 cm; 30 cm] grundsätzlich möglich sind.

Die Breite B des Behälters 10 (siehe Figur 1) hat vorzugsweise einen Wert im Intervall [78 cm; 100 cm], wobei im betrachteten Ausführungsbeispiel B = 80 cm gilt.

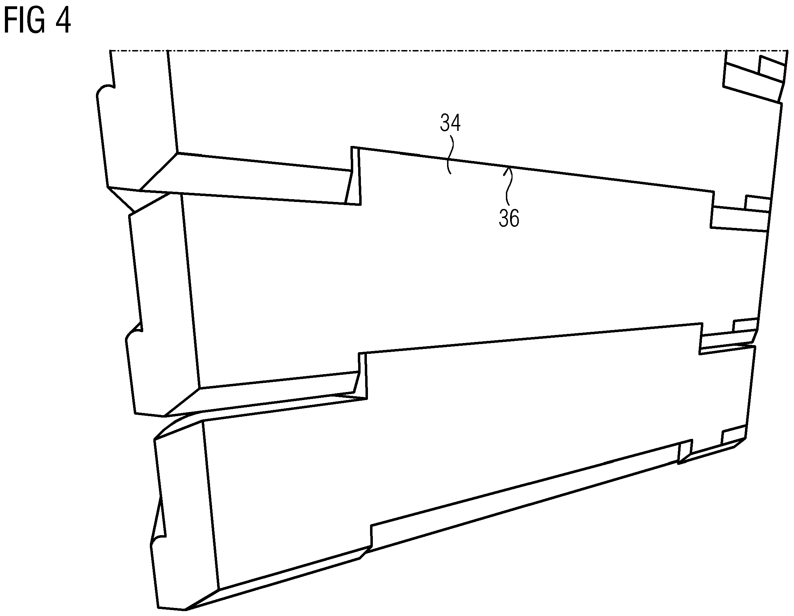

Die Haltestruktur 24, insbesondere mit den Wandteilen 30, ist im Transportbereich 18 und im Bodenbereich 12 des Grundkörpers 26 mit Schnittstellen 34 und 36 versehen, die speziell zur Stapelung, insbesondere zu einer einfachen und kompakten Stapelung mehrerer Behälter 10 vorgesehen. Die Schnittstellen 34, 36 weisen zueinander korrespondierende Strukturen, insbesondere Erhebungen und Aussparungen auf, die wie in Figur 4 gezeigt miteinander zusammenwirken.

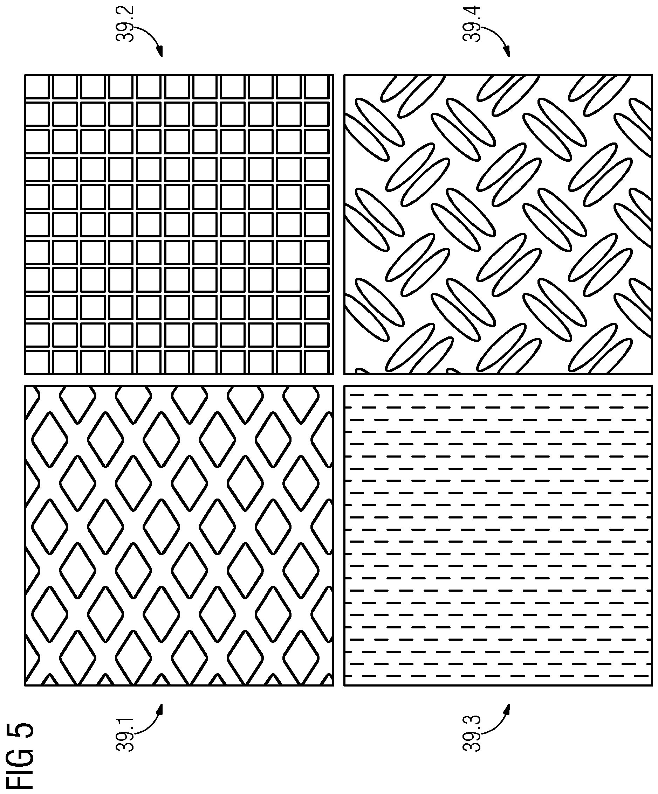

Die Oberflächen des Grundkörpers 26 können nach Herstellen desselben nachbearbeitet werden. Die Unterseite 14 kann insbesondere derart nachbearbeitet werden, dass die Bodenfläche 16 des Behälters 10 eine Oberflächenstruktur aufweist, die zur Erhöhung des Reibwerts beim Herstellen eines Reibschlusses zwischen der Bodenfläche 16 und einer Oberfläche einer Fördereinheit dient. Beispielhafte Oberflächenstrukturen in Form von Beschichtungen 39.1 bis 39.4 sind in Figur 5 dargestellt.

Zur Änderung der mechanischen Eigenschaften des Behälters 10 sind ebenfalls Versteifelemente möglich, die im Material des Grundkörpers 26 eingebettet bzw. eingelassen sind. Diese Versteifelemente können insbesondere Kunststoffeinlagen sein.

Als weitere Nachbearbeitung des Grundkörpers 26 kann ferner die Aufbringung einer Speicher- und Sendeeinheit, beispielsweise in der Form eines RFIDs, auf die Unterseite 14 des Behälters 10 erfolgen. In diese können Identifikationsinformationen eines transportierten Stückguts, insbesondere Gepäckstücks, gespeichert werden. Die Speicher- und Sendeeinheit kann auf die Unterseite 14 geklebt werden oder sie kann mit dem Material der Bodenfläche 16 verschmolzen werden. Die Speicher- und Sendeeinheit kann an eine andere Seite des Behälters 10 aufgebracht werden.

Figur 6 zeigt eine weitere Ausführung des Behälters 10. Um unnötige Wiederholungen zu vermeiden werden lediglich die Unterschiede zur oben beschriebenen Ausführung erläutert.

In dieser Ausführung des Behälters 10 werden im Grundkörper 26 interne Aussparungen 40 vorgesehen. Diese Aussparungen 40 können in der Form geschlossener Taschen ausgebildet sein, die frei vom Material des Grundkörpers 26 sind oder können - wie in der betrachteten Ausführung - auf zumindest einer Seite nach außen offen sein. Die Aussparungen 40 sind vorzugsweise im Bereich der Stirnseiten des Behälters 10 angeordnet. Die internen Aussparungen können durch die Ausformung einer Gitterstruktur des Grundkörpers 26 bei dessen Herstellung oder bei einer Nachbearbeitung des Grundkörpers 26 gebildet werden, insbesondere durch eine Perforierung des Grundkörpers 26.

Durch die Wahl des Materials des Grundkörpers und die optionalen, oben beschriebenen Aussparungen können vorteilhaft mittlere Materialdichten in der Spanne von 0,3 g/cm³ bis 2 g/cm³ erreicht werden. Abhängig von der Materialdichte und den gewählten Abmessungen kann eine Behälter 10 zur Verfügung gestellt, welcher ein Gewicht in der Spanne von 5 kg bis 30 kg aufweist.

Figur 7 zeigt eine weitere Ausführung des Behälters 10. Um unnötige Wiederholungen zu vermeiden werden lediglich die Unterschiede zur oben beschriebenen Ausführung der Figuren 1 bis 5 erläutert.

In dieser Ausführung weist der Behälter 10 Mittel 42, 44 auf, die auf die untere Oberfläche 15 des Bodenbereichs 12 und auf die obere Oberfläche 21 des Transportbereichs 18 aufgebracht sind. Das Aufbringen der Mittel 42, 44 erfolgt als Nachbehandlung des Grundkörpers 26. Die Mittel 42, 44 entsprechen jeweils einer Beschichtung der Oberfläche 15 bzw. 21, wobei diese Beschichtung die Bodenfläche 16 bzw. die Aufnahmefläche 22 mit in Bezug auf mechanische Beanspruchung, Steifigkeit und Festigkeit hochwertigen Oberflächeeigenschaften bildet.

Weitere Ausführungen, bei welchen lediglich eine Beschichtung einer einzigen Oberfläche 15 bzw. 21 oder eine zusätzliche Beschichtung der von den Wandteilen 30 gebildeten Stirnseiten, der Übergangsflächen 32 und/oder der in Förderrichtung 28 orientierten seitlichen Flanken des Grundkörpers 26 sind ebenfalls möglich. Insbesondere ist eine allseitige Beschichtung des Grundkörpers 26 denkbar.

Die oben genannten Beschichtungen können insbesondere aus einem thermoplastischen Material sein. Sie werden außerdem vorteilhafterweise in sogenannten "In-Mold-Verfahren" aufgebracht, bei welchen der Grundkörper 26 in einem SpritzgießWerkzeug mit einem Material zur Herstellung derartigen Strukturen hinterspritzt wird. Beispiele sind "Back-foaming", "In-Mold-Skinning", "Thermal Embossing / Stamping".

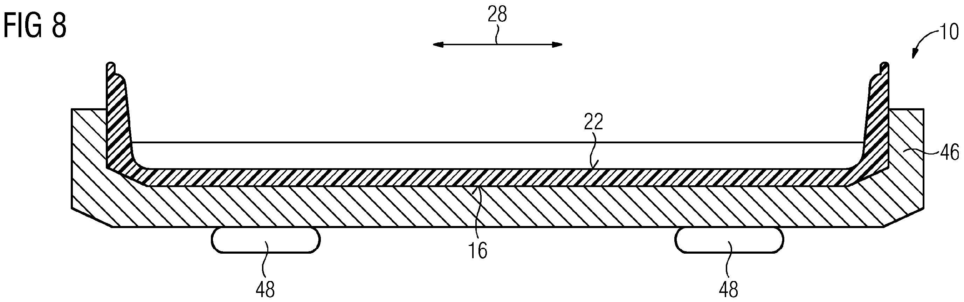

Der Behälter 10 gemäß den oben beschriebenen Ausführungen kann mit bestehenden Fördereinheiten mithilfe eines Adapters benutzt werden, der eine Aufnahmemöglichkeit für den Behälter 10 aufweist und mit zur jeweiligen Fördereinheit passenden Führungselementen ausgestattet ist. Ein Beispiel ist in Figur 8 gezeigt, in welcher der Behälter 10 in einem in der Form eine Wanne ausgebildeten Adapter 46 angeordnet ist. Figur 8 zeigt die Anordnung in einer Schnittansicht parallel zur Förderrichtung 28 und senkrecht zur Bodenfläche 16. Der Adapter 46 weist Führungselementen 48 auf, beispielsweise in der Form von Führungsnuten, die mit korrespondierenden Elementen der Fördereinheit zusammenwirken. Der Adapter 46 ist insbesondere aus einem harten Fasenmaterial hergestellt.

## Patentansprüche

1. Behälter (10) zum Transportieren von Gepäckstücken in einer Sortieranlage an einem Flughafen mittels eines Fördersystems zur Förderung von Stückgütern, insbesondere zur Förderung von Gepäckstücken, mit einem Bodenbereich (12) zur Kopplung mit einer Fördereinheit des Fördersystems und einem vom Bodenbereich (12) gestützten Transportbereich (18), der zur Aufnahme eines zu transportierenden Gepäckstücks vorgesehen ist, wobei der Bodenbereich (12) und der Transportbereich (18) jeweils aus einem röntgenstrahldurchlässigen Material hergestellt sind,
wobei der Bodenbereich (12) und der Transportbereich (18) von einem Grundkörper (26) gebildet sind, der einstückig und aus einem röntgenstrahldurchlässigen Material hergestellt ist, wobei der Grundkörper (26) von einem Schaumstoffformteil gebildet ist, wobei der Behälter (10) metallfrei ausgebildet ist und
dass die Kopplung des Bodenbereichs (12) mit einer Fördereinheit des Fördersystems über einen Reibschluss erfolgt, wobei zur Erhöhung des Reibwertes für den Reibschluss der Grundkörper (26) zumindest eine Oberfläche (16) aufweist, die mit einer Beschichtung (39) hinterspritzt ist oder eine nachbearbeitete Oberflächenstruktur aufweist.

2. Behälter (10) nach Anspruch 1, wobei der Grundkörper (26) aus einem thermoplastischen strukturellen Hartschaum gebildet ist.

3. Behälter (10) nach Anspruch 1 oder 2, wobei das Schaumstoffformteil einen Partikelschaumstoff auf thermoplastischer Basis aufweist.

4. Behälter (10) nach Anspruch 3, wobei das Schaumstoffformteil einen Partikelschaumstoff auf Polypropylen-Basis aufweist.

5. Behälter (10) nach einem der Ansprüche 1 bis 4, wobei der Grundkörper (26) interne Aussparungen (40) aufweist.

6. Behälter (10) nach einem der Ansprüche 1 bis 5, wobei im Transportbereich (18) eine zentrale, flache Aufnahmefläche (22) zur Aufnahme eines Gepäckstücks angeordnet ist, die von einer sich über die Aufnahmefläche (22) erhebenden Haltestruktur (24) umgeben ist.

7. Behälter (10) nach Anspruch 6, wobei die Haltestruktur (24) Wandteile (30.1, 30.2) aufweist, die an die Aufnahmefläche (22) angrenzen, sich senkrecht zu dieser erheben und - relativ zu einer Förderrichtung (28) - einen Vorder- bzw. Hinterrand bilden.

8. Behälter (10) nach Anspruch 6 oder 7, wobei die Haltestruktur (24) ein Paar flacher, relativ zur Aufnahmefläche (22) geneigter Übergangsflächen (32.1, 32.2) aufweist, die sich beidseitig der Aufnahmefläche (22) an diese anschließen und jeweils - relativ zu einer Förderrichtung (28) - einen seitlichen Rand bilden.

9. Behälter (10) nach Anspruch 8, wobei im Bodenbereich (12) eine Bodenfläche (16) angeordnet ist und die geneigten Übergangsflächen (32.1, 32.2) eine maximale Höhe (H) relativ zur Bodenfläche (16) aufweist, wobei die Aufnahmefläche (22) eine Höhe (h) relativ zur Bodenfläche (16) aufweist, die kleiner als 50% der maximalen Höhe (H) der Übergangsflächen (32.1, 32.2) ist.

10. Behälter (10) nach einem der Ansprüche 6 bis 9, wobei im Bodenbereich (12) eine Bodenfläche (16) angeordnet ist und die Haltestruktur (24) eine maximale Höhe (Hₘₐₓ) relativ zur Bodenfläche (16) aufweist, wobei die Aufnahmefläche (22) eine Höhe (h) relativ zur Bodenfläche (16) aufweist, die kleiner als 20% der maximalen Höhe (Hₘₐₓ) der Haltestruktur (24) ist.

11. Behälter (10) nach einem der Ansprüche 6 bis 10, wobei die Haltestruktur (24) im Bodenbereich (12) und im Transportbereich (18) jeweils eine Schnittstelle (34, 36) aufweist, die zum Behälterstapeln vorgesehen ist.

12. Sortieranlage für Gepäckstücke an einem Flughafen, umfassend ein Fördereinheiten aufweisendes Fördersystem zur Förderung von Gepäckstücken und mit einer Fördereinheit gekoppelte Behälter (10) zum Transportieren der Gepäckstücke, wobei die Behälter (10) nach einem der Ansprüche 1 bis 11 ausgebildet sind.

## Claims

1. Container (10) for transporting luggage items in a sorting installation at an airport by means of a conveyor system for conveying general cargo, in particular for conveying luggage items, with a base region (12) for coupling to a conveyor unit of the conveyor system and a transport region (18) supported by the base region (12), which is provided for receiving a luggage item to be transported, wherein the base region (12) and the transport region (18) are in each case manufactured from an x-ray-permeable material,
wherein the base region (12) and the transport region (18) are formed by a base body (26), which is manufactured in one piece and from an x-ray-permeable material,
wherein the base body (26) is formed by a foam moulded part,
wherein the container (10) is embodied as metal-free and the coupling of the base region (12) to a conveyor unit of the conveyor system is effected via a frictional connection,
wherein, in order to increase the coefficient of friction for the frictional connection, the base body (26) has at least one surface (16) which is back-injected with a coating (39) or has a subsequently processed surface structure.

2. Container (10) according to claim 1, wherein the base body (26) is formed of a thermoplastic structural hard foam.

3. Container (10) according to claim 1 or 2, wherein the foam moulded part has a particle foam based on a thermoplastic.

4. Container (10) according to claim 3, wherein the foam moulded part has a particle foam based on a polypropylene.

5. Container (10) according to one of claims 1 to 4, wherein the base body (26) has internal recesses (40).

6. Container (10) according to one of claims 1 to 5, wherein a central, flat receiving area (22) is arranged in the transport region (18) for receiving a luggage item, which receiving area (22) is surrounded by a retaining structure (24) standing above the receiving area (22).

7. Container (10) according to claim 6, wherein the retaining structure (24) has wall parts (30.1, 30.2), which abut the receiving area (22), stand perpendicular thereto and - relative to a conveyor direction (28) - form a front and rear edge.

8. Container (10) according to claim 6 or 7, wherein the retaining structure (24) has a pair of flat transition areas (32.1, 32.2) at a tilt relative to the receiving area (22), which abut the receiving area (22) on both sides and in each case form a lateral edge - relative to a conveyor direction (28) .

9. Container (10) according to claim 8, wherein a base area (16) is arranged in the base region (12) and the tilted transition areas (32.1, 32.2) have a maximum height (H) relative to the base area (16), wherein the receiving area (22) has a height (h) relative to the base surface (16) which is less than 50% of the maximum height (H) of the transition areas (32.1, 32.2).

10. Container (10) according to one of claims 6 to 9, wherein a base area (16) is arranged in the base region (12) and the retaining structure (24) has a maximum height (Hₘₐₓ) relative to the base area (16), wherein the receiving area (22) has a height (h) relative to the base area (16) which is less than 20% of the maximum height (Hₘₐₓ) of the retaining structure (24) .

11. Container (10) according to one of claims 6 to 10, wherein the retaining structure (24) in the base region (12) and in the transport region (18) has an interface (34, 36) in each case which is provided for stacking containers.

12. Sorting installation for luggage items at an airport, comprising a conveyor system having conveyor units for conveying luggage items and containers (10) coupled to a conveyor unit for transporting the luggage items, wherein the containers (10) are embodied according to one of claims 1 to 11.

## Revendications

1. Conteneur (10) destiné au transport de bagages dans une installation de tri dans un aéroport, au moyen d'un système de transport permettant d'acheminer des marchandises de détail, notamment permettant d'acheminer des bagages, comprenant une zone de fond (12) destinée à s'accoupler à une unité de transport du système de transport et une zone de transport (18) supportée par la zone de fond (12) et servant à recevoir un bagage à transporter, la zone de fond (12) et la zone de transport (18) étant réalisées chacune dans un matériau transparent aux rayons X, la zone de fond (12) et la zone de transport (18) étant formées d'un corps de base (26) qui est produit d'un seul tenant et dans un matériau transparent aux rayons X, le corps de base (26) étant formé d'une pièce moulée en produit alvéolaire, le conteneur (10) étant réalisé sans métal, et que l'accouplement de la zone de fond (12) avec une unité de transport du système de transport s'effectue par friction, le corps de base (26) comportant, pour augmenter le coefficient de frottement pour la friction, au moins une surface (16) sur laquelle un revêtement (39) est surmoulé par injection ou qui présente une structure superficielle obtenue par un traitement ultérieur.

2. Conteneur (10) selon la revendication 1, dans lequel le corps de base (26) est formé d'une mousse dure structurelle thermoplastique.

3. Conteneur (10) selon la revendication 1 ou 2, dans lequel la pièce moulée en produit alvéolaire comprend une mousse particulaire à base de matière thermoplastique.

4. Conteneur (10) selon la revendication 3, dans lequel la pièce moulée en produit alvéolaire comprend une mousse particulaire à base de polypropylène.

5. Conteneur (10) selon l'une des revendications 1 à 4, dans lequel le corps de base (26) comporte des évidements internes (40).

6. Conteneur (10) selon l'une des revendications 1 à 5, dans lequel la zone de transport (18) comporte une surface de réception (22) plate centrale destinée à la réception d'un bagage, qui est entourée par une structure de maintien (24) s'élevant au-dessus de la surface de réception (22).

7. Conteneur (10) selon la revendication 6, dans lequel la structure de maintien (24) comprend des parties de paroi (30.1, 30.2) qui sont contiguës à la surface de réception (22), s'élèvent perpendiculairement à celle-ci et forment, par rapport à une direction de transport (28), un bord antérieur respectivement postérieur.

8. Conteneur (10) selon la revendication 6 ou 7, dans lequel la structure de maintien (24) comprend une paire de surfaces de transition (32.1, 32.2) plates inclinées par rapport à la surface de réception (22), qui sont jointes à la surface de réception (22) sur ses deux côtés et forment chacune, par rapport à une direction de transport (28), un bord latéral.

9. Conteneur (10) selon la revendication 8, dans lequel la zone de fond (12) comporte une surface de fond (16) et les surfaces de transition (32.1, 32.2) inclinées ont une hauteur maximale (H) par rapport à la surface de fond (16), la surface de réception (22) ayant une hauteur (h) par rapport à la surface de fond (16) qui est inférieure à 50% de la hauteur maximale (H) des surfaces de transition (32.1, 32.2).

10. Conteneur (10) selon l'une des revendications 6 à 9, dans lequel la zone de fond (12) comporte une surface de fond (16) et la structure de maintien (24) a une hauteur maximale (Hₘₐₓ) par rapport à la surface de fond (16), la surface de réception (22) ayant une hauteur (h) par rapport à la surface de fond (16) qui est inférieure à 20% de la hauteur maximale (Hₘₐₓ) de la structure de maintien (24) .

11. Conteneur (10) selon l'une des revendications 6 à 10, dans lequel la structure de maintien (24) est pourvue, dans la zone de fond (12) et dans la zone de transport (18), respectivement, d'une interface (34, 36) qui sert à l'empilement du conteneur.

12. Installation de tri pour bagages dans un aéroport, comprenant un système de transport comportant des unités de transport, destiné au transport de bagages, et des conteneurs (10), accouplés à une unité de transport, pour le transport des bagages, les conteneurs (10) étant réalisés selon l'une des revendications 1 à 11.
